(19) Europäisches Patentamt / European Patent Office / Office européen des brevets

(11) **EP 2 116 809 A2**

(12) **EUROPEAN PATENT APPLICATION**

(43) Date of publication:
**11.11.2009 Bulletin 2009/46**

(51) Int Cl.:
**G01B 9/02** *(2006.01)*    **G01B 11/24** *(2006.01)*
**G02B 21/18** *(2006.01)*

(21) Application number: **08290578.7**

(22) Date of filing: **18.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.06.2007 FR 0704452**

(71) Applicant: **Lauer, Vincent**
**68200 Mulhouse (FR)**

(72) Inventor: **Lauer, Vincent**
**68200 Mulhouse (FR)**

Remarks:
Claim 16 is deemed to be abandoned due to non-payment of the claims fee (Rule 45(3) EPC).

(54) **Interferometer for use in a microscope**

(57) The interferometer of the invention comprises a moving mirror 106 for rotating the direction of an illumination beam on an observed sample 114, and a reference beam interfering with a beam diffracted by the object 114 on a detector 111. The reference beam is tilted relative to the diffracted beam.

Fig. 1

## Description

### Field of the invention:

The invention relates to an interferometer which mays be used for example as a microscope or as a reader of holographic memories.

### State of the art:

Tomographic microscopes are described for example in the patent application number PCT/FR99/00854 and in corresponding US patent US 6,525,875. These applications are included by reference in the present application. The tomographic microscope as described on figure 25 of patent application PCT/FR99/00854 needs at least three successive image acquisitions to obtain a bidimensional frequency representation representing a diffracted wave. The phase difference between the illumination beam and the reference beam must be modified between each acquisition. During the acquisition of these three images the system is highly sensitive to vibrations. Additionally the phase control of the reference wave requires costly devices when high speed acquisition is required. A number of these bidimensional frequency representations are then required in order to generate a three-dimensional frequency representation.

Holographic systems exist that use an off-axis reference wave to obtain, from a single image, a phase and amplitude information. For example, publication [Colomb] "Automatic procedure for aberration compensation in digital holographic microscopy and applications to specimen shape compensation" Applied optics vol.45 No.5, 10 february 2006, by Tristan Colomb et al. shows such a holographic system.

In realizations of the device described by patent PCT/FR99/00854 as the one described by [Lauer] Journal of Microscopy vol.205 pp 165-176, a rotating mirror is used for modifying the direction of the illumination beam. In order to improve the acquisition speed whilst still limiting the influence of vibrations, the patent application PCT/FR99/00854 proposes various means other than mirrors, for example redirection systems that use liquid crystals.

### Description of the invention:

The invention describes an interferometer device which can be used for example in a microscope of the kind described in patent application PCT/FR99/00854 in order to make it faster, cheaper, and less sensitive to vibrations. The invention is however not limited to the application described in patent application PCT/FR99/00854 and is more generally a device and method for acquiring a plurality of holograms for a plurality of illumination directions.

A problem to be resolved is that in the device of patent application number PCT/FR99/00854 the sweeping of the directions of the illuminating beam must be made point by point; at each point the lighting direction must remain stable during a time period corresponding to the successive acquisition of three images on the camera. The direction mays then be modified before starting a new sequence of three acquisitions. The variations of the direction of the lighting beam therefore has to be step by step which generates vibrations and does not allow simple devices as mobile mirrors to obtain a fast variation of the illumination direction.

In order to allow using rotating mirrors at a high speed it is desireable, according to the invention, to replace the step by step movement of the mirrors by a continuous movement which generates less vibrations and less noise. According to the invention this is made possible by using an off-axis reference beam, which allows informations concerning the phase and amplitude of the diffracted wave to be acquired in a single image acquisition. According to the invention this method reduces the perturbation of image characteristics due to the continuing movement of the mirrors during the acquisition phase.

The invention consists in an interferometer comprising:

- means for generating a luminous beam,
- means for splitting a luminous beam in a reference beam and an illumination beam,
- means for lighting the observed object with the illumination beam,
- means for modifying the direction of the illumination beam,
- means for collecting the beam diffracted by the observed object,
- means for making the reference beam interfere with the diffracted beam in order to obtain an interference pattern which depends on the direction of the illumination beam,
- a detector arranged to successively acquire a first interference pattern corresponding to a first direction of the illumination beam, a second interference pattern corresponding to a second direction of the illumination beam, and a third interference pattern corresponding to a third direction of the illumination beam, wherein said first, second and third directions differ from each other,

characterized by the following facts:

- the means for making the reference beam interfere with the diffracted beam are adapted so that on the detector, the direction of the reference wave is not comprised within the directions that are attainable by the diffracted wave,
- the means for modifying the direction is adapted so that the direction of the illumination beam rotates from the first direction to the third direction, without stopping during the acquisition of the second interference pattern.

Thus the acquisition of the second interference pattern is made whilst the illumination beam is rotating, without stopping the rotation. The acquisition of the first and third interference patterns and of further interference patterns may also be done whilst the illumination beam is rotating. The fact that the direction of the reference wave is not comprised within the directions attainable by the diffracted wave (i.e. the reference beam is off-axis) makes it possible to obtain phase and amplitude of the diffracted wave from a single interference pattern. The interferometer of the invention thus allows proper and quick acquisition of a number of interference patterns.

Preferably, the variations of the angular speed of the illumination beam between the first direction and the third direction are less than 30% of the average angular speed of the illumination beam between the first direction and the third direction. Even more preferably, the variations of the angular speed of the illumination beam between the first direction and the third direction are less than 10% of the average angular speed of the illumination beam between the first direction and the third direction. Ideally the direction of the illumination beam rotates at a substantially constant angular speed between the first direction and the third direction.

It is to be understood that although only three illumination directions are used to define the invention, the device of the invention can be adapted to acquire interference patterns for numerous illumination directions. Preferably, the rotation speed and the direction of rotation of the illumination beam vary very smoothly and are substantially constant between any three successively sampled points. This mays however be true for most points but not necessarily for all points, since stopping the rotation of the illumination beam at a reduced number of points does not necessarily generate excessive vibrations.

The means for modifying the direction of the illumination beam preferably comprise at least one moving mirror since this device is performing well for a reasonable cost and the invention avoids vibrations in order to make it possible to use a rotating mirror at high speed. For highest speeds it is generally preerable to use two moving mirrors. For example such mirrors may be high-speed rotating mirrors.

For the device to work efficiently, the effective duration of the acquisition of the interference pattern must preferably be adapted so that the variation of the direction of the illumination beam during the second acquisition is lower than the aperture of the diffraction-limited illuminating beam . This aperture is half the wavelength, divided by the illumination beam diameter. Equivalently, in a real or virtual Fourier plane wherein the illumination beam is focused in a diffraction-limited spot, the movement of that spot during the second acquisition must preferably be on a distance lower than the Airy diameter of said spot.

Preferably, there should be a further security margin of a factor 2 of preferably 4 or more preferably 10 between the variation of the direction of the illumination beam during the second acquisition and the aperture of the diffraction-limited illuminating beam, and thus between the distance over which the diffraction-limited spot moves during the second acquisition, and the airy diameter of this spot.

This can be obtained by having a sufficiently small rotation of the illumination beam between each two acquisitions, less than the diffraction-limited aperture and ideally less than a fraction of the diffraction-limited aperture. Alternatively, this can be obtained by shortening the acquisition time so that the duration of the second acquisition is a fraction of the time needed for the rotation from the first to the third direction.

Shortening the acquisition time can be made by shortening the integration time of the detector. If the integration time of the detector is adjustable it should be set to less than its maximum value for the acquisition frequency (or frame rate) considered. Preferably this integration time should be less than a quarter of the duration of the rotation of the illuminating beam from the first direction to the third direction, and even more preferably it should be less than a tenth of the duration of the rotation of the illuminating beam from the first direction to the third direction.

Alternatively the interferometer mays comprise a means to shut down the illumination between the first acquisition and the second acquisition, and between the second acquisition and the third acquisition. Shutting down the illumination ensures that light does not reach the detector anymore and thus shortens the acquisition time. In this case the duration of the illumination should preferably be less than the integration time of the detector. Also, the duration of the illumination during the second acquisition should preferably be less than a quarter of the duration of the rotation of the illuminating beam from the first direction to the third direction, and even more preferably it should be less than 10% of the duration of the rotation of the illuminating beam from the first direction to the third direction.

Whichever the method employed to shorten it, the acquisition time should preferably be less than a quarter of the duration of the rotation of the illuminating beam from the first direction to the third direction, and even more preferably it should be less than a tenth of the duration of the rotation of the illuminating beam from the first direction to the third direction.

The fact that the reference wave is not part of the attainable directions of the diffracted wave reaching the detector makes it possible to increase the amount of information detected at once on the receiver. This is known as off-axis illumination. Preferably, the angle between the direction of the reference beam on the detector and the nearest direction attainable by the diffracted beam on the detector is at least equal to the largest attainable aperture of the diffracted beam on the detector. There is however a tolerance on this and usable results can be obtained for lower tilt angles. Especially, if the reference beam is sufficiently stronger than the illumination beam, then the direction of the reference beam on the detector mays be very near to one extreme attainable direction of the diffracted beam, and mays even coincide with such attainable direction, without notably degrading performance. However using too strong a reference beam degrades the signal to noise ratio which is not desireable so this is not a preferred configuration. The tilt of the reference wave relative to the diffracted beam defines a tilt direction in which the reference wave is tilted relative to the average of the directions attainable by the diffracted wave.

The interference pattern needs to be appropriately sampled. The minimum sampling period is shorter in the tilt direction than in the direction orthogonal to the tilt direction. Therefore it is desireable that the pixels of the detector are not square, but rectangular, the shortest side of the rectangle being oriented along the tilt direction and its longest side being oriented orthogonal to the tilt direction. Preferably, the longest side of a rectangular pixel is at least twice its shortest side, more preferably it is at least three times its shortest side, and ideally it should be at least four times its shortest side. It should be noted that, for example, the longest side mays be only two times the shortest side without degrading the image qualities as compared to the case where it is four times the shortest side. However, in this case final image dimensions can be modified and may not be square.

Instead of adjusting the pixels shape, it is also possible to adjust the shape of the interference pattern by applying a different magnification or demagnification in the tilt direction than in a direction orthogonal to the tilt direction. Then it becomes possible to use a detector having square or near square pixels, without oversampling. The different magnification or demagnification mays be applied to the diffracted beam only, before it interferes with the reference beam, or it can be applied to the interference pattern directly, that is, to the superposition of the diffracted beam and the reference beam. Preferably, the magnification along the tilt direction is at least twice the magnification along the direction orthogonal to the tilt direction. More preferably, it is at least three times the magnification along the direction orthogonal to the tilt direction. However ideally it is at least four times the magnification along the direction orthogonal to the tilt direction.The different magnification or demagnification can be obtained by a magnifying assembly comprising at least one cylindrical lens. More preferably the magnifying assembly may comprise four cylindrical lenses. In this case two of these lenses apply a magnification in the tilt direction and the two other cylindrical lenses apply a demagnification in the direction orthogonal to the tilt direction.

It is possible to apply a combination of adapted rectangular pixels and different magnification/demagnification. For example if the pixels are twice shorter in the tilt direction than in the direction orthogonal to the tilt direction, and if the interference pattern is magnified by a factor of two in the tilt direction relative to the direction orthogonal to the tilt direction, then the result is equivalent, for example, to using rectangular pixels four times shorter in the tilt direction than in the direction orthogonal to the tilt direction, with no magnification/demagnification.

In any case, optimal sampling will require more pixels in the tilt direction than in the direction orthogonal to the tilt direction in order to obtain a square or near square image. Preferably, there will be at least twice more pixels in the tilt direction than in the direction orthogonal to the tilt direction. More preferably there will be at least three times more pixels in the tilt direction than in the direction orthogonal to the tilt direction. Ideally there should be at least four times more pixels in the tilt direction than in the direction orthogonal to the tilt direction.

Non-optimal sampling is also possible. For example square pixels may be used without magnification or demagnification. But this means that four times more pixels are used than necessary, which is costly and degrades system speed. In order to use a square pixel detector but at the same time reduce the complexity of the electronics and the amounts of data transferred from the detector to a computer, an intermediate solution may be used. According to the invention, the video signal coming out of the detector may be undersampled by the digitizer. Preferably, the digitizer will acquire one sample for at least two consecutive pixels translated into the video signal. Ideally, the digitizer will acquire one sample for each group of four consecutive pixels. In order to improve the signal to noise ratio and robustness of this undersampled device, the video signal may be low-pass filtered before being sampled. Typically, after low-pass filtering the Nyquist sampling rate will be substantially equal to the effective sampling rate.

In prior art holographic microscopes using off-axis holography, the detector is generally placed at a distance from the image plane as this mimics traditional analog holography. The image plane is the plane in which a best-quality image of the observed sample is formed by the optics. According to the invention, placing the detector too far from either an image plane or a Fourier plane is not favorable because it increases the number of pixels needed for sampling the interference pattern of a given imaged field size without undersampling. In the invention, the detector is preferably placed less than 2 cm from an image plane or a Fourier plane, more preferably it is placed less than 1 cm from an image plane or a Fourier plane, and ideally it is substantially coincident with a Fourier plane or an image plane. A Fourier plane is a plane where the non-diffracted part of the illumination beam is focused. The non-diffracted part of the illumination beam is also called the zeroth order of diffraction.

Due to the fact that the rotation of the illuminating beam is not stopped during each image acquisition, in the invention the acquisition of images from the detector does not need to be synchronized with the means for modifying the direction of the illuminating beam.

The invention is also a method for tomographic interferometric microscopy comprising the steps of:

- generating a luminous beam,
- splitting a luminous beam in a reference beam and an illumination beam,
- lighting the observed object with the illumination beam,
- modifying the direction of the illumination beam,
- modifying the direction of the illumination beam,
- collecting the beam diffracted by the observed object,
- making the reference beam interfere with the diffracted beam in order to obtain an interference pattern which depends on the direction of the illumination beam, wherein the direction of the reference wave is not comprised within the directions that are attainable by the diffracted wave,
- acquiring a first interference pattern corresponding to a first direction of the illumination beam,
- rotating the direction of the illumination beam towards a third direction of the illumination beam,
- whilst the illumination beam is rotating, acquiring a second interference pattern corresponding to a second direction of the illumination beam, without stopping the rotation of the illumination beam,
- acquiring a third interference pattern corresponding to the third direction of the illumination beam.

Preferably the variations of the angular speed of the illumination beam rotating from the first direction to the third direction are less than 30% of the average angular speed of the illumination beam during its rotation from the first direction to the third direction. Ideally the direction of the illumination beam rotates from the first direction to the third direction with a substantially constant angular speed.

**Quick description of the figures:**

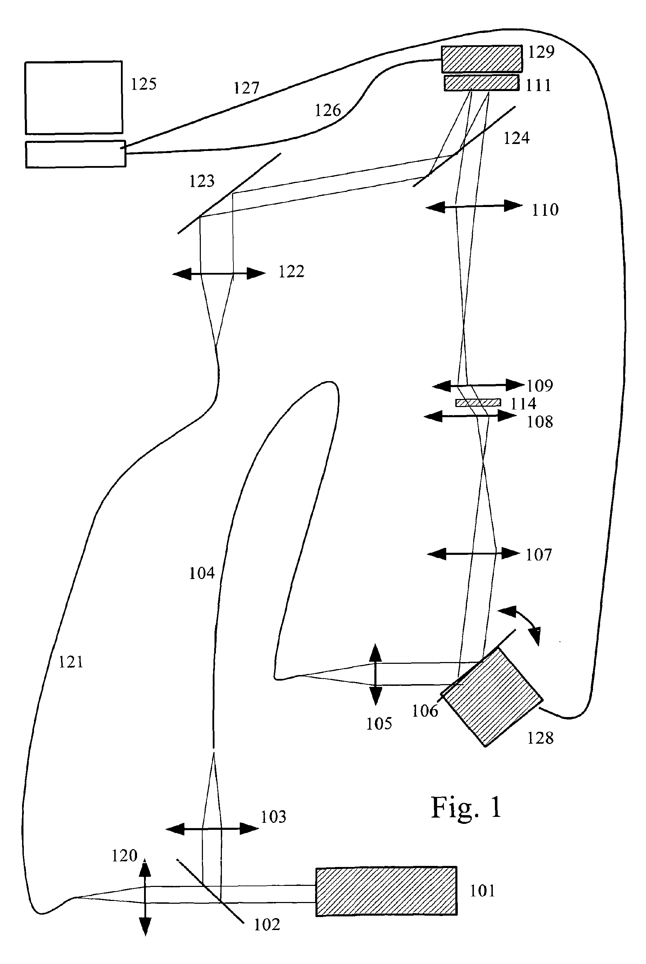

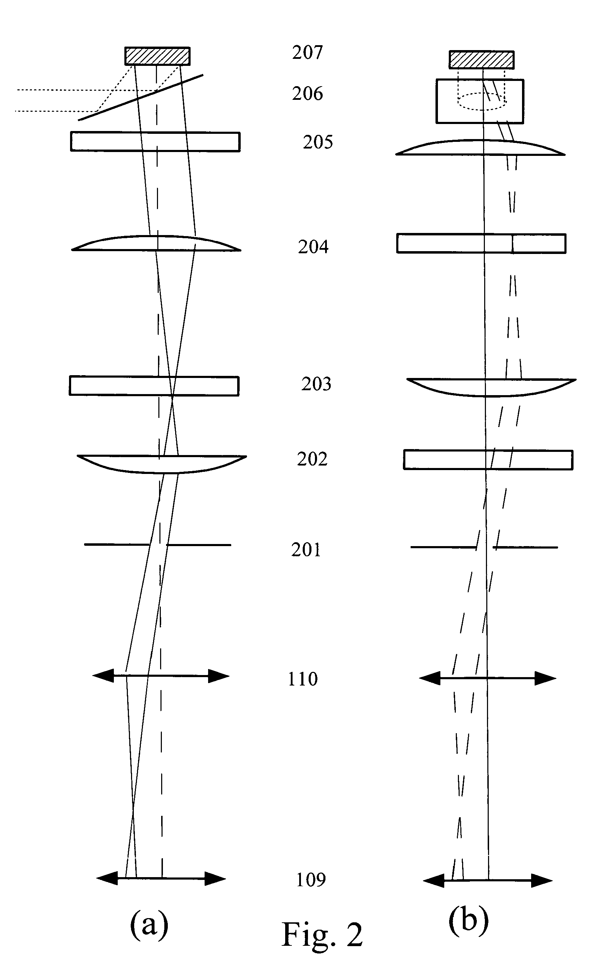

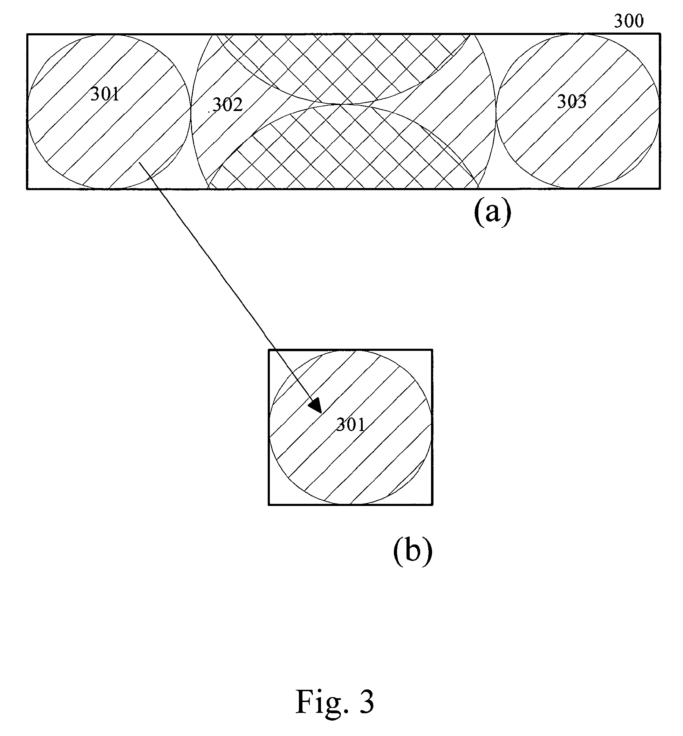

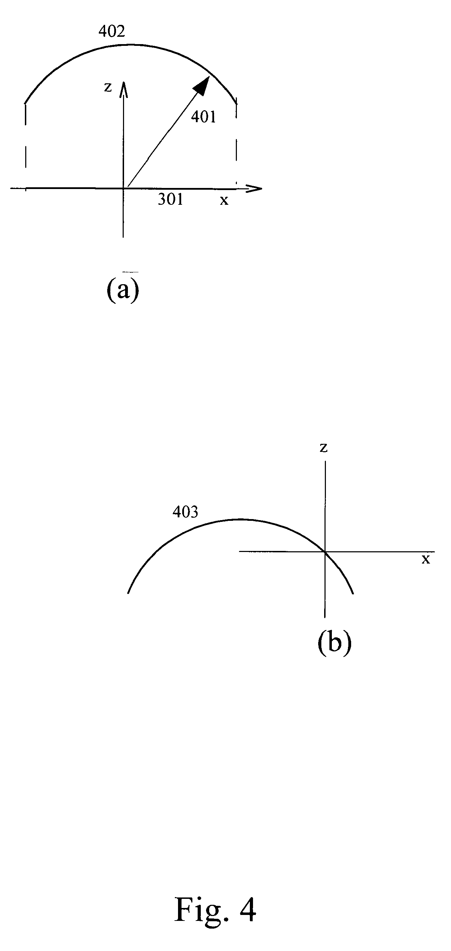

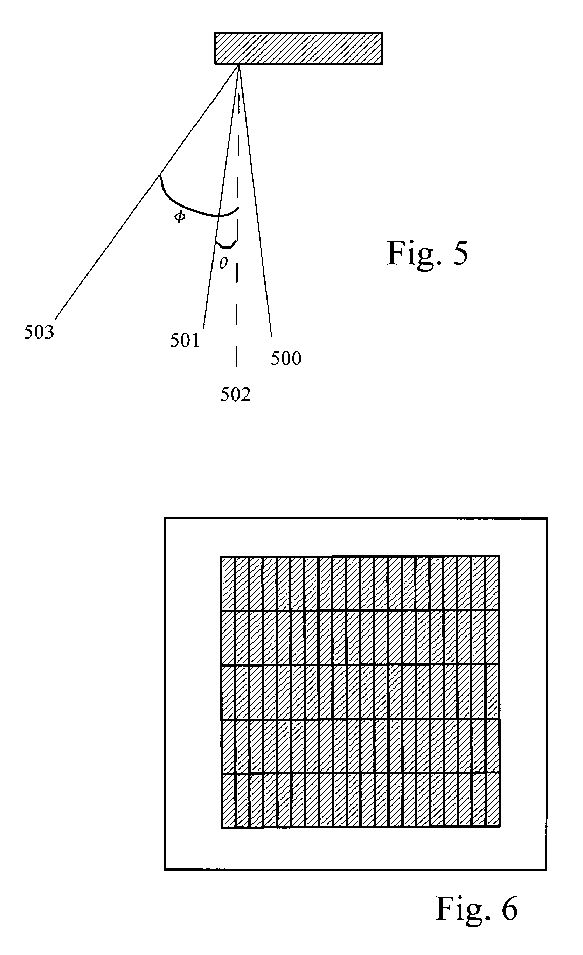

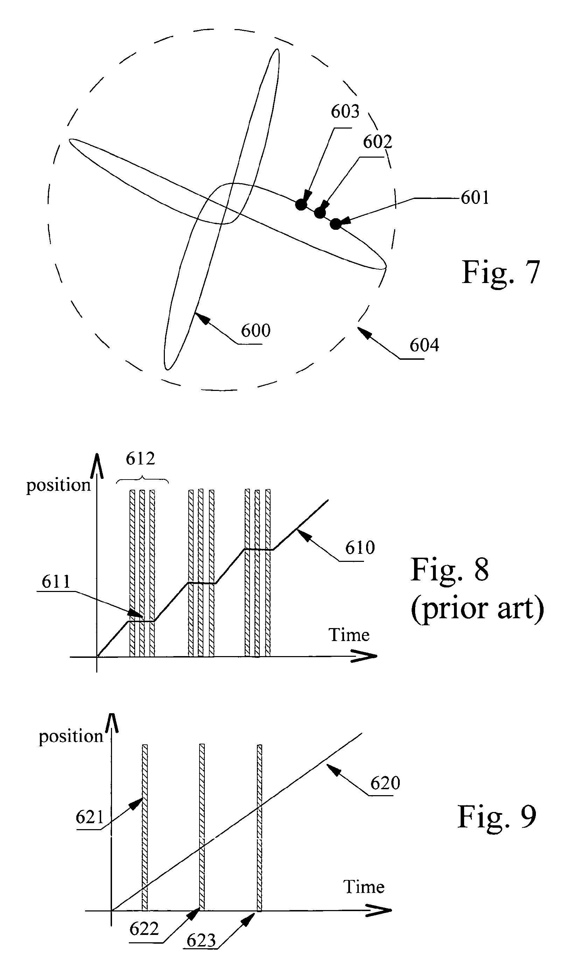

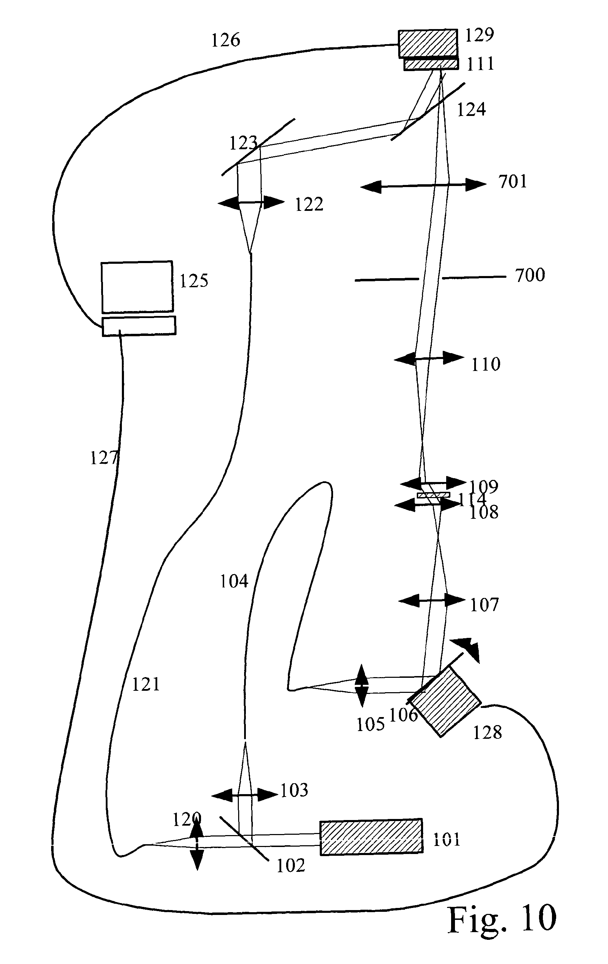

Figure 1 shows an interferometer according to the invention. Figure 2 shows an additional optical device designed to facilitate the use of detectors having near square pixels. Figure 3 shows how a frequency representation of the diffracted wave can be extracted from the diffraction pattern digitized on the detector, using Fourier transform. Figure 4 shows steps for calculating a three-dimensional frequency representation. Figure 5 shows the aperture of the beam to be measured and the direction of the reference beam. Figure 6 shows a detector. Figure 7 shows the trajectory of a point lit by the illumination beam in the back focal plane of the objective. Figure 8 shows the movement of that point as a function of time and according to the prior art. Figure 9 shows the movement of that point as a function of time in the device of the invention. Figure 10 is a modification of figure 1 with the detector being placed in a Fourier plane.

**Description of a preferred embodiment:**

Figure 1 shows a preferred realization. A laser 101 produces a beam which is split by a beamsplitter 102 in a reference beam and an illumination beam. The illumination beam is focused by a lens 103 on the entry of an optical fiber 104, and the reference beam is focused by a lens 120 on the entry of an optical fiber 121. The illumination beam coming out of the fiber 104 is then made parallel by a lens 105 and reflected on a mobile mirror 106 rotating around two axes. It passes through lens 107 and condensor 108 so that the illumination beam is parallel in the observed object 114. The beam diffracted by the observed object is then collected by the microscope objective 109, passes through the tube lens 110 and reaches the detector 111. The mobile mirror 106 is for example driven by two motors enclosed in a case 128 and controlled by the computer 125 through a command card (not shown) and a connection 127. The motors driving the mobile mirror may typically be stepping motors or a dual-axis galvanometer assembly as used on confocal microscopes. The single moving mirror of figure 1 mays be replaced by two moving mirrors. In this case each of the two moving mirrors can have a single axis of rotation. For example it can be an assembly of two galvanometric mirrors.

The computer 125 is connected to the detector 111 by the electronics of the camera body 129 and by a connection 127 which mays for example be a « firewire » connection. It receives digitized images from the detector 111 and processes these images. The detector 111 is placed in the image plane, conjugate to an observed plane of the observed object 114. The non-diffracted part of the illumination beam, having passed through the object 114, is plane when reaching the detector 111. It could also be divergent or convergent but this would make the optical system and/or computation slightly more complicated. For example if it is divergent, then preferably the reference wave must also be made divergent, and/or the computations shown below must be altered to compensate for such divergence.

The reference beam coming out of the fiber 121 is made plane by the lens 122 and then reflected by mirrors 123 and 124 directed towards detector 111.

The directions that are attainable by the diffracted beam reaching the detector 111 are limited by a numerical aperture $\sin\theta$ wherein $\theta$ is the half angle of the aperture cone limited on figure 5 by the rays 500 and 501. The rays 500 and 501 represent the extreme directions that can be reached by the light beam reaching a point of the detector taking into account the numerical aperture of the microscope objective 109. Therefore we

obtain $\sin\theta = \dfrac{NA}{g}$ wherein $NA$ is the numerical aperture of the microscope objective 109 and $g$ is the magnification of the system made up of the objective 109 and tube lens 110. The angle between the mean direction 502 of the diffracted beam and the direction 503 of the reference beam is $\phi$. When the direction 502 is orthogonal to the detector's plane then $\sin\phi=3\sin\theta$. The angles being relatively small a reasonable approximation yields $\phi=3\theta$. We thus also have $\phi-\theta=2\theta$ so the angle $\phi-\theta$ between the direction of the reference beam and the nearest direction attainable by the diffracted wave is here equal to the angle $2\theta$ between opposite extreme directions attainable by the diffracted wave. The tilt direction is the one in which the reference wave is tilted. This direction is orthogonal to the optical axis and situated in the plane of figure 5 or figure 1.

The sampling period on the detector is equal to the distance between the centers of two adjacent pixels. The sampling period on the detector is preferably adjusted, in the tilt direction, for optimal sampling in the Nyquist sense (i.e. largest sampling period allowed without folding of the spatial frequency spectrum). This yields a sampling period $\dfrac{\lambda}{2(\sin\theta + \sin\phi)}$ in the tilt direction. Taking into account the relation $\sin\phi=3\sin\theta$ this yields a sampling period of $\dfrac{\lambda}{8\sin\theta}$ in the tilt direction. The sampling period on the detector in the direction orthogonal to the tilt direction should preferably be $\dfrac{\lambda}{2\sin\theta}$.

Therefore pixels of the detector are chosen as rectangular, with the side oriented along the tilt direction being one quarter of the side oriented orthogonally to the tilt direction. The focal length of the tube lens 110, the wavelength of the laser, and the pixel size of the detector 111 are preferably adapted to each other so that the sampling period is $\dfrac{\lambda}{8\sin\theta}$ in the tilt direction and $\dfrac{\lambda}{2\sin\theta}$ in the direction orthogonal to the tilt direction, the tilt angle $\phi$ being adapted so that $\sin\phi=3\sin\theta$.

The detector 111 is of the kind illustrated on figure 6. It mays be for example a CCD or CMOS detector but its pixels are preferably rectangular, four times longer in a direction orthogonal to figure 1 than in the tilt direction. The full surface of the detector is square so that the image acquired on this detector has four times more pixels in the tilt direction than in the direction orthogonal to the tilt direction. A program running on the computer 125 computes the discrete Fourier transform of the image acquired on the detector to obtain the transformed image represented on figure 3(a). The pixel, or equivalently the sampled point, is represented as square on figure 3(a) so that the image is four times larger than it is high, taking into account the number of pixels of the detector. The image of figure 3(a) comprises a zone 301 which is the Fourier transform of the wave to be measured (diffracted wave reaching the detector from the observed object). The image further comprises a zone 303 which is symmetrical from the zone 301 and in which the values at each point of the image are complex conjugates of corresponding values on symmetrical points of figure 3(a). The image further comprises a zone 302 which results from the presence of the wave to be measured alone and which is present independent of whether a reference wave is present or not. The contents of zone 302 results from the interference of the wave to be measured with itself and from a lateral folding of the spectrum due to the undersampling of this self-interference in the direction along which the pixels of detector 111 are longer.

The program running on the computer 125 extracts from the image represented on figure 3(a) the lateral one quarter of the image comprising zone 301. This extracted part of the image is a frequency representation of the diffracted wavefront on the detector and is represented on figure 3(b). The image on figure 3(b) is a bidimensional complex frequency representation equivalent to the image obtained in patent application PCT/FR99/00854 from three images acquired on the detector 119 of figure 1 for a given direction of the illumination wave. It is also equivalent to the Fourier transform of the intermediate image obtained using the method described in the same patent by a linear combination of three images acquired on the detector 2018 of figure 25 of the same application, for a fixed direction of the illuminating beam and for three values of the phase shift of the reference wave. The program running on the computer mays calculate the reverse discrete Fourier transform of the image represented on figure 3(b). This reverse Fourier transform yields a square image which represents the diffracted wavefront reaching the detector. For certain applications, calculating the diffracted wavefront reaching the detector is a necessary step, although in the case of tomographic microscopy the frequency representation of figure 3b can be directly used in calculating the three dimensional representation of the observed sample.

It should be noted that it is not absolutely necessary to have $\sin\phi=3\sin\theta$. Values of $\phi$ that verify $\sin\phi>3\sin\theta$ are perfectly acceptable but yield a uselessly high number of pixels on the detector. Values of $\phi$ that verify $\sin\theta < \sin\phi < 3\sin\theta$ make it possible to use less pixels but yield a progressive degradation of image quality. Errors in the image when $\sin\theta<\sin\phi<3\sin\theta$ are minimized by using a reference wave sufficiently stronger than the illumination wave, which makes the autocorrelation of the diffracted wave negligible as compared to the wave to be measured. However excessive increase of the reference wave intensity also degrades the signal to noise ratio so the reference wave cannot be made excessively strong. Whatever the choice of the tilt angle $\phi$, the ideal sampling periods on the detector are

$$\frac{\lambda}{2(\sin\theta + \sin\phi)}$$ in the tilt direction and $$\frac{\lambda}{2\sin\theta}$$

in the direction orthogonal to the tilt direction. Smaller sampling periods can be used but yield a higher number of pixels than is necessary. When using optimal sampling periods but a value of $\phi$ that does not verify $\sin\phi = 3\sin\theta$, the size in pixels of a square detector is not necessarily 4 times more pixels in one direction than in another. The image of figure 3(a) still comprises the zones 301 and 303 but the zone 302 mays be partially superimposed to the zones 301 and 303. The program running on the computer extracts from the image of figure 3(a) a lateral part which is a square image having the same height as the image of figure 3(a). This image replaces the image of figure 3(b) in that it is the frequency representation of the diffracted wavefront on the detector, and it can be used like the image of figure 3(b) in subsequent calculations. However when $\sin\phi < 3\sin\theta$ the image quality is degraded as compared to the preferred configuration of $\sin\phi = 3\sin\theta$.

The computer controls the moving mirror so as to realize a continuous variation of the direction of the illumination wave, i.e. the illumination wave rotates. The illumination wave is plane inside the observed object and it is focused in the back focal plane of the objective, which approximately corresponds to the pupil plane. This rotation of the illumination wave can be described by the trajectory of the focusing point of the illumination wave in the back focal plane of the objective. Figure 7 shows an example 600 of such trajectory, inside the disk 604 which contains the attainable points and which is limited by the aperture of the objective or condenser. Whilst the focusing point of the illumination beam follows this trajectory, the detector performs a high number of acquisitions. As an example the points 601, 602, 603 where the detector performs three successive acquisitions have been represented.

Figure 8 shows the position of the focusing point of the illuminating beam along the trajectory 600, as a function of time and in a prior art system. In a given point, for example point 601, it is necessary to perform three successive acquisitions represented by the three lines 612. During these three acquisitions the position of the focusing point as a function of time must be stable as shown by curve 610 which has a horizontal part 611.

Figure 9 shows an equivalent of figure 8 but in the case of the present invention. At point 601 there is only one acquisition remaining, represented by the line 621. The curve 620 showing the position of the focusing point as a function of time is regular and has no horizontal part. The integration time of the detector 111 (width of line 621) is adapted so that during the integration time the point 601 moves along the trajectory 600 on a distance sufficiently shorter than than the width of the airy spot formed by this point, which is diffraction limited. That way the image acquired on the detector is substantially the same as the image which would be acquired for a fixed direction of the illumination beam. Figure 9 shows three vertical lines 621, 622, 623 corresponding respectively to the image acquisitions at points 601, 602, 603. The speed of the focusing point, or equivalently the rotational speed of the illumination wave in the sample, is substantially constant between points 601 and 603 and especially does not come to zero when performing the image acquisition at point 602, unlike on figure 8 representing the prior art.

The irregularity of the curve 610 makes it difficult, in the prior art, to have a fast rotation of the illumination wave. In the invention the regular appearance of curve 620 makes it possible to scan much faster, generating few vibrations.

When the trajectory of the focusing point of the illuminating beam follows the entire trajectory 600, the speed of the focusing point, or equivalently the rotational speed of the illuminating wave in the sample, mays vary. This variation is preferably a smooth variation, in order to avoid vibrations, without the stepwise variation of the kind shown on figure 8. Image acquisitions are performed all along the trajectory of the focusing point, points 601 to 603 being only examples. If the interferometer is used as the basis for a tomographic microscope of the kind described in patent application PCT/FR99/00854 then there is no need for a precise synchronization between the rotational movement of the illuminating beam in the observed sample and the acquisition of images on the detector. Such a tomographic microscope is little sensitive to the exact direction of the illuminating wave during each image acquisition. This differs from the prior art shown on figure 8, wherein a precise synchronization is needed to allow the image acquisition to take place while the movement of the focusing point of the illumination beam is stopped. In the present case the connection 127 between the mirror motors and the computer 125 may even be suppressed if the mirror motors are driven independently. The frequency of image acquisition and the number of image acquisitions for generating one tomographic image must still be adjusted, however, to the speed and duration of the overall trajectory of the focusing point.

For each point of acquisition, for example 601, the detector records an image from which the computer calculates a bidimensional frequency representation of the kind shown by figure 3(b). The computer mays then use these bidimensional representations in the manner shown in patent application PCT/FR99/00854 to obtain a three-dimensional representation of the observed object. In such case it will perform a projection of the representation 301 on a portion of a sphere 402 as illustrated on figure 4(a) on which the arrow 401 represents the direction of the illmination beam before it is diffracted by the observed object. It then translates the representation so obtained in order to bring back the point of impact of the illuminating wave to zero, then it applies a phase shift so as to zero the phase at the center of the coordinate system. It obtains a representation 403 which is translated and phase shifted. It superimposes a plurality of such representations to obtain a three-dimensional representation. It computes the inverse Fourier transform of this frequency representation to obtain a spatial representation of the observed object.

The device of the invention can also be used as a holographic memory reader. In an example of holographic memory the information is recorded by letting a plane reference wave interfere with an information carrying wave which is itself made up of a plurality of plane waves, wherein each plane wave carries a bit of information. Each information bit will finally be recorded on a corresponding point of a three-dimensional frequency representation of the holographic support, for example its value may be 1 if the corresponding complex value of the frequency representation is non-zero, and zero if that copmplex value is zero. The holographic support is placed as an observed object 114 on figure 1 and each point of the three-dimensional frequency representation of the observed object corresponds to a point in the two-dimensional frequency representation shown on figure 3(b). Each point of the frequency representation of figure 3(b) thus represents a bit of information. Depending on how the recording was made, the entire representation of figure 3(b) mays directly correspond to a page of information. In this case the page of information can be read directly with the interferometer of the invention without generating a representation of the entire observed object.

Instead of a CCD or CMOS detector having rectangular pixels it is also possible to use a detector having square pixels and to compute, analogically or numerically, the average of four aligned pixels in order to obtain the equivalent of a rectangular pixel. For example if a camera produces an analog signal, a lowpass filtering of that signal generates this average which can then be digitized at a lower frequency than would be necessary to acquire each square pixel.

It is also possible to use a detector with square pixels and to process the image using all square pixels but it yelds a processing using four times more pixels than is necessary, yielding a division by 4 of the processing speed and increased memory needs.

However most available detectors have square pixels. Some of these can detect rectangular images at a high speed. In order to allow the use of such detectors at the highest attainable speed, the optical system can be modified as shown on figure 2.

On figure 2 a diaphragm 201 replaces the detector 111 of figure 1 and the beamsplitter 124 of figure 1 is replaced by the beamsplitter 206, the detector 111 being replaced by the detector 207. Only a part of the system is represented on figure 2, the rest of it being as on figure 1. Elements 109 and 110 on figure 2 are the same as on figure 1. The plane of figure 2(b) is orthogonal to the plane of figure 2(a) but these figures represent the same system and the same light beams. We have represented on figure 2 in plain lines and dotted lines the light rays that are useful to understand the system. The light beam coming out of diaphragm 201 passes through cylindrical lenses 202, 203, 204, 205 then the beamplitter 206 and reaches the detector 207. The reference beam is reflected by beamsplitter 206 towards the detector 207. Cylindrical lenses 202, 204 make up an assembly having magnification 2 and affecting the beam in the plane of figure 2(a) as shown in plain lines. The cylindrical lenses 203, 205 make up an assembly having magnification ½ in the plane of figure 2(b) as shown by the beam in dotted lines. The complete assembly 202, 203, 204, 205 realizes a transformation of the image shown on diaphragm 201, consisting in a magnification 2 along the tilt direction and ½ along the other direction. The image finally obtained on the detector 207 is four times longer in a direction than in another. The tilt angle $\phi$ of the reference wave and the half aperture angle $\theta$ of the diffracted wave in the tilt direction are divided by two as compared to figure 1.

The image formed on detector 207 can be digitized by a detector having square pixels to obtain an image 300 having four times as many pixels in one direction than in another. Said image can then be processed as shown on figure 3 to obtain a square image as shown on figure 3(b).

On figure 2 the beamsplitter 124 could have been left in place instead of replaced by the beamsplitter 206. This would however have increased the design constraints on the cylindrical lens assembly.

In the device of figure 1 the detector is placed in an image plane. It is also possible to place the detector in a Fourier plane. This is illustrated by figure 10 which is based on figure 1 but in which the detector 111 has been placed in a Fourier plane. In the image plane where the detector was placed on figure 1, there is a diaphragm 700 on figure 10. A lens 701 then focuses the non-diffracted part of the illumination beam (or zeroth order of diffraction) onto the detector 111 which is now in a Fourier plane. The reference beam is superimposed on the diffracted beam by the beamsplitter 124 which is placed just before the detector 111. The detector is the same as previously, illustrated by figure 6, with the shortest side of the rectangular pixels being oriented in the tilt direction. The diffracted wavefront reaching the detector is calculated in the manner explained for figure 1, but because the detector is in a Fourier plane the diffracted wavefront is actually a frequency representation of the diffracted wave. For the purpose of calculating a tomographic image of the sample, the diffracted wavefront replaces the frequency representation of figure 3(b). Thus the process for calculating a tomographic image of a sample is as follows, with the detector in the Fourier plane: the Fourier transform of the detector image is calculated by the program running on the computer to obtain the image shown on figure 3(a), then the left square of that image is extracted to get the image shown on figure 3(b), then the inverse Fourier transform of the image of figure 3(b) is calculated to get a square image representative of the diffracted wavefront in the CCD plane. This image is then projected on the portion of sphere 402. The resulting three-dimensional frequency representation is then translated and phase-shifted to obtain the representation 403 as shown on figure 4(b). A plurality of such representations can then be superimposed to obtain the three-dimensional frequency representation of the oserved sample. A three-dimensional inverse Fourier transform of the three-dimensional frequency representation then yields the image of the observed object. If the device with the detector in the Fourier plane is used for readout of holographic memories, then the representation of the diffracted wavefront reaching the detector may directly correspond to data recorded in the holographic memory.

It is also possible to install the detector in a plane which is neither a Fourier plane nor an image plane. However, in this case, the program running on the computer must perform extra calculation to inverse the trajectory of light between the image or Fourier plane, and the plane where the detector is placed. Furthermore, more pixels are needed on the detector than if the sample is placed in a Fourier plane or image plane, for the same field size and numerical aperture of the objective.

The device of figure 10 may also be modified by changing the shape of the diffracted beam using the lens assembly of figure 2. In this case the diaphragm 201 of figure 2 can be placed for example in the plane where the detector 111 is placed on figure 10. Square pixels can then be used on the detector, the active detector surface being rectangular.

The invention is not limited to the specific preferred embodiment of the invention and its variations described above.

### Industrial applications.

The present interferometer can be used for example for high-speed three-dimensional imaging of microscopic samples or for reading holographic memories.

### Claims

1. - interferometer comprising:

   - means for generating a luminous beam,
   - means for splitting the luminous beam in a reference beam and an illumination beam,
   - means for lighting the observed object with the illumination beam,
   - means for modifying the direction of the illumination beam in the observed object,
   - means for collecting the beam diffracted by the observed object,
   - means for making the reference beam interfere with the diffracted beam in order to obtain an interference pattern which depends on the direction of the illumination beam,
   - a detector arranged to successively acquire a first interference pattern corresponding to a first direction of the illumination beam, a second interference pattern corresponding to a second direction of the illumination beam, and a third interference pattern corresponding to a third direction of the illumination beam, wherein said first, second and third directions differ from each other,

   **characterized by** the following facts:

   - the direction of the reference wave reaching the detector is tilted in a tilt direction relative to the average of the directions attainable by the diffracted wave, the tilt amplitude being such that the direction of the reference wave reaching the detector is not comprised within the directions that are attainable by the diffracted wave,
   - the means for modifying the direction of the illumination beam is adapted so that the direction of the illumination beam rotates from the first direction to the third direction, without stopping during the acquisition of the second interference pattern.

2. - interferometer according to claim 1, wherein the variations of the angular speed of the illumination beam rotating from the first direction to the third direction are less than 30% of the average angular speed of the illumination beam during its rotation from the first direction to the third direction.

3. - interferometer according to claim 2, wherein the means for modifying the direction is adapted so that the direction of the illumination beam rotates from the first direction to the third direction with a substantially constant angular speed.

4. - interferometer according to any of claims 1 to 3, wherein the integration time and/or the duration of the illumination of the detector during the acquisition of the second interference pattern is less than a quarter of the duration of the rotation of the illuminating beam from the first direction to the third direction.

5. - interferometer according to claim 4, wherein the duration of the illumination and/or the integration time of the detector during the second acquisition is less than 10% of the duration of the rotation of the illuminating beam from the first direction to the third direction.

6. - interferometer according to any of claims 1 to 5, each pixel of the detector being at least twice shorter in the tilt direction than in a direction orthogonal to the tilt direction.

7.  - interferometer according to claim 6, each pixel of the detector being at least four times shorter in the tilt direction than in a direction orthogonal to the tilt direction.

8.  - interferometer according to any of claims 1 to 7, comprising an optical system adapted to decrease the aperture of the diffracted beam along the tilt direction, relative to the aperture of the diffracted beam along a direction orthogonal to the tilt direction.

9.  - interferometer according to any of claims 1 to 8, the means for varying the direction of the illumination beam comprising at least one rotating mirror.

10. - interferometer according to any of claims 1 to 9, the detector being placed less than 2 cm from an image plane or a Fourier plane.

11. - interferometer according to claim 10, the detector being substantially coincident with an image plane or a Fourier plane.

12. - interferometer according to any of claims 1 to 11, wherein the acquisition of images from the detector is not synchronized with the means for modifying the direction of the illumination beam.

13. - Method for tomographic interferometric microscopy comprising the steps of:

>   - generating a luminous beam,
>   - splitting a luminous beam in a reference beam and an illumination beam,
>   - lighting the observed object with the illumination beam,
>   - modifying the direction of the illumination beam,
>   - modifying the direction of the illumination beam,
>   - collecting the beam diffracted by the observed object,
>   - making the reference beam interfere with the diffracted beam in order to obtain an interference pattern which depends on the direction of the illumination beam, wherein the direction of the reference wave is not comprised within the directions that are attainable by the diffracted wave,
>   - acquiring a first interference pattern corresponding to a first direction of the illumination beam,
>   - rotating the direction of the illumination beam towards a third direction of the illumination beam,

>   - whilst the illumination beam is rotating, acquiring a second interference pattern corresponding to a second direction of the illumination beam, without stopping the rotation of the illumination beam,
>   - acquiring a third interference pattern corresponding to the third direction of the illumination beam.

14. - The method of claim 13, wherein the variations of the angular speed of the illumination beam rotating from the first direction to the third direction are less than 30% of the average angular speed of the illumination beam during its rotation from the first direction to the third direction.

15. - the method of claim 14, wherein the direction of the illumination beam rotates from the first direction to the third direction with a substantially constant angular speed.

16. - a method according to any of claims 13 to 15 , wherein the acquisition of the interference patterns is not synchronized with the rotation of the direction of the illumination beam.

Fig. 1

207

206

205

204

203

202

201

110

109

(a)     Fig. 2     (b)

(a)

(b)

Fig. 3

402

z

401

301    x

(a)

z

403

x

(b)

Fig. 4

Fig. 5

Fig. 6

Fig. 7

Fig. 8
(prior art)

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• FR 9900854 W

• US 6525875 B

**Non-patent literature cited in the description**

• **TRISTAN COLOMB.** Automatic procedure for aberration compensation in digital holographic microscopy and applications to specimen shape compensation. *Applied optics,* 10 February 2006, vol. 45 (5

• **LAUER.** *Journal of Microscopy,* vol. 205, 165-176